# EUROPEAN PATENT APPLICATION

(11) **EP 3 988 886 A1**
(43) Date of publication of application: **27.04.2022**
(21) Application number: 20202959.1
(22) Date of filing: 21.10.2020
(51) Int. Cl.: F28D 20/00, F28F 27/00, G01L 7/00

(54) **INSTALLATION OF LOAD CELLS FOR MEASUREMENT OF FORCES IN THERMAL ENERGY STORAGES**

(71) Applicant: Siemens Gamesa Renewable Energy GmbH & Co. KG, 20097 Hamburg (DE)
(72) Inventor: Gerhard, Maike, 22145 Hamburg (DE); Hagen, Eva, 22111 Hamburg (DE); Pagelsen, Niels, 22303 Hamburg (DE); Schmunck, Viktor, 21039 Börnsen (DE); Wagner, Jennifer Verena, 20257 Hamburg (DE)
(74) Representative: Aspacher, Karl-Georg

(57) **Abstract**

The present invention relates to a heat storage device, comprising a storage wall (101) at least partially surrounding an inner storage volume (Vi) of the heat storage device, an insulation layer (102) arranged at an inner surface of the storage wall (101) facing to the inner storage volume (Vi), a load cell element (103) for measuring forces acting from the inner storage volume (Vi) against the storage wall (101), and an insulation element (104). The insulation layer (102) comprises a cut-out section in which the insulation element (104) is movably inserted in such a manner that the insulation element (104) is movable with respect to the insulation layer (102) upon acting of forces from the inner storage volume (Vi) against the insulation element (104). The load cell element (103) is coupled to the insulation element (104) in such a manner that forces acting from the inner storage volume (Vi) against the insulation element (104) are transferrable to the load cell element (103).

## Description

### Field of the invention

The present invention relates to a heat storage device and a method for manufacturing the respective heat storage device.

### Art background

A thermal energy storage uses heat that is converted from e.g. electrical energy, available as residual (waste) heat or taken from an existing heat cycle, and then stored in a heat storage device comprising heat storage material, e.g. rocks.

At a later point in time the heat stored in the heat storage device is used for district heating or other purposes such as industrial processes requiring heat or it is reconverted into electrical energy and fed into the grid during periods of high demand.

In thermal energy storages which are based on granular storage material, e.g. rocks or sand, the walls of the housing surrounding the storage material must withstand forces originating from the storage material. Analytic calculation methods are available to assess these forces during the cold state. However, little is known about the development of these forces due to thermal expansion or contraction in the operation modes of the energy storage system.

Therefore, measurements have to be performed for assessing the forces originating from the storage material. In general, relatively high safety margins have to be included during the design of the storage as the occurring forces are not well known. This increases the overall costs, especially for large size storages.

### Summary of the invention

It may be an object of the present invention to provide a heat storage device with a robust and exact measuring system for measuring forces acting on a storage wall.

This object is solved by a heat storage device and a method of manufacturing a heat storage device according to the subject matters of the independent claims.

According to a first aspect of the invention a heat storage device is presented. The heat storage device comprises a storage wall at least partially surrounding an inner storage volume of the heat storage device and an insulation layer arranged at an inner surface of the storage wall facing to the inner storage volume. Furthermore, the heat storage device comprises a load cell element for measuring forces acting from the inner storage volume against the storage wall and an insulation element, wherein the insulation layer comprises a cut-out section in which the insulation element is movably inserted in such a manner that the insulation element is movable with respect to the insulation layer upon acting of forces from the inner storage volume against the insulation element. The load cell element is coupled to the insulation element in such a manner that forces acting from the inner storage volume against the insulation element are transferrable to the load cell element.

According to a further aspect of the invention a method for manufacturing a heat storage device is presented. According to the method a storage wall is provided at least partially surrounding an inner storage volume of the heat storage device. An insulation layer is arranged at an inner surface of the storage wall facing to the inner storage volume. An insulation element is movably inserted in a cut-out section of the insulation layer in such a manner that the insulation element is movable with respect to the insulation layer upon acting of forces from the inner storage volume against the insulation element. The load cell element is coupled to the insulation element in such a manner that forces acting from the inner storage volume against the insulation element are transferrable to the load cell element.

The heat storage device is adapted for receiving thermal energy from a heated working fluid in order to store the thermal energy. The heat storage device includes heat storage material. The heat storage material may comprise or consist of rocks, bricks, stone, lava stone, granite, basalt and/or ceramics provided as bulk material (which may be configured as pebble bed). Preferably, the heat storage material comprises or consists of sand and/or stones, in particular gravel, rubble and/or grit. The stones can be natural stones or artificial stones (e.g. containers filled with material, such as clinkers or ceramics). The heat storage device can thus be provided cost efficiently while being capable of storing large amounts of thermal energy. The heat storage device comprises a fluid inlet for injecting working fluid into the inner storage volume of the heat storage device and a respective fluid outlet for ejecting the working fluid out of the inner storage volume of the heat storage device. However, also more than single fluid inlet and fluid outlet openings of the heat storage device may be provided which are coupled to a respective fluid cycle.

The heat storage device comprises a storage wall which surrounds the inner storage volume. The heat storage wall provides the structural stability of the heat storage device. In order to provide a proper insulation of the heat storage system between the inner storage volume and the environment of the storage device, an insulation layer is arranged at an inner surface of the storage wall. The insulation layer may be formed of temperature isolating material which provides less strength than the storage wall.

In order to measure the forces acting from the inner storage volume against the storage wall, at least one load cell element is provided. The load cell element is a force transducer which converts a force such as tension, compression, pressure, or torque generated in the inner storage volume into an electrical signal that can be measured and standardized. As the force applied to the load cell increases, the electrical signal changes proportionally. Summarizing, the load cells are components that convert forces such as compression, tension or torque into an electrical signal which can be measured. For example, a load cell element is a strain gauge, wherein upon deformation of a strain gauge member its electrical resistance changes and thereby indicates a respective strain.

In order to protect the load cell element from the temperature and other impacts originating in the inner storage volume, the load cell element is thermally isolated from the inner storage volume. Specifically, the load cell element is arranged within the storage wall spaced apart and separated from the inner storage volume. In order to assure a force transmission between the forces acting in the inner storage volume and the load cell element, the insulation layer comprises an opening and a cutout section, respectively. Within the cutout section, a movable insulation element, which is also made of thermally isolating material, is arranged. Hence, upon acting of forces from the inner storage volume against the insulation element, the insulation element is movable against the load cell element in order to transmit respective forces acting from the inner storage volume against insulation element.

Hence, by the approach of the present invention, load cells are integrated into a heat storage wall of the storage housing of the heat storage device to measure the forces of the storage material inside the inner storage volume acting on the heat storage wall. As the allowed operating temperature of the load cells is generally well below the temperatures occurring inside the storage device in the fully charged state, the load cells are integrated at an outer position in the storage wall while still receiving information about the forces originating from the storage material. The present invention allows the measurement of forces originating from the storage material by using a load cell while avoiding contact with high temperature regions of the storage device inside the inner storage volume. The movable insulation element bridges the installation location of the load cell element and the inner storage volume while providing a transmitting of respective forces from the inner storage volume to the load cell element.

According to a further exemplary embodiment, the load cell element is directly coupled to a surface of the insulation element, which surface faces away from the inner storage volume. Hence, without intermediate force damping elements, the force generated in the inner storage volume is transferred to the load cell element such that loss of measurement accuracy can be reduced.

According to a further exemplary embodiment, the load cell element is arranged within the storage wall. Alternatively, the load cell element may comprise a section which extends into the cut-out section of the insulation layer. Hence, the thickness of the insulation element may be thinner than the thickness of the insulation layer, in order to provide a smooth and homogeneous inner surface of the insulation layer and the respective insulation element facing to the inner storage volume.

According to a further exemplary embodiment, the insulation element is made of the same material as the insulation layer. Specifically, the insulation element may be a cut-out part of the insulation layer. Hence, since the insulation element and the insulation layer are made of the same material, tensions between both elements can be avoided due to a similar heat expansion.

According to a further exemplary embodiment, the load cell element comprises a coupling surface to be coupled with a further coupling surface of the insulation element, wherein the coupling surface of the load cell element and the further coupling surface of the insulation element have the same dimensions (and e.g. surface area). Hence, since the dimensions of the coupling surface of the load cell element with the further coupling surface of the insulation element are the same (and the contact pressure per unit area on both surfaces, accordingly), an undistorted force transmission between the load cell element and the insulation element can be provided.

According to a further exemplary embodiment, at the cut-out section in the insulation layer, guiding elements are formed, wherein the insulation element is coupled to the guiding elements for being guided inside the cut-out section. A guiding element can be formed of a guiding rail or a guiding groove, to which a respective guiding section of the insulation element can be engaged. Hence, a friction between the insulation element and the insulation layer may be reduced. Furthermore, a proper movement of the insulation element inside the cut-out section can be controlled.

According to a further exemplary embodiment, wherein the load cell element comprises a return force element (in particular integrated in the load cell element) which is coupled to the insulation element in such a way that a return force is generatable acting in the direction towards the inner storage volume. The return force element may be an elastic element which may push the insulation element back in its initial position. The return force element may also be a compression spring or a tension spring and may be located in such a way that a return force can be generated which pushes the insulation element in the direction to the inner storage volume. Hence, if a pressure inside the inner storage volume reduces and hence the force acting on the insulation element reduces, the return force generated by the return force element pushes the insulation element in the direction away from the load cell element in order to bring the insulation element in an initial state.

According to a further exemplary embodiment, the storage wall comprises a wall cut-out section for accommodating the load cell element. The wall cut-out section forms a respective accommodation space, such as a blind hole or through hole, into which the load cell element can be arranged and fixed, in particular exchangeable.

According to a further exemplary embodiment, the heat storage device comprises a wall element which is movably inserted in a wall cut-out section between the insulation element and the load cell element. The wall element is coupled to the insulation element in such a manner that the wall element is movable with respect to the storage wall upon acting of forces from the inner storage volume against the insulation element. The load cell element is coupled to the wall element in such a manner that forces acting from the inner storage volume against the insulation element are transferrable via the movable wall element to the load cell element.

Hence, the load cell element may be arranged within the storage wall at the location spaced apart from a contact surface between the storage wall and the insulation element. The distance between the insulation element and the load cell element is bridged by the wall element which is movably inserted between the load cell element and the insulation element. If forces acting onto the insulation element, the insulation element may be moved partially within the wall cut-out section. Alternatively, a part of the wall element may also be moved into the cut-out section of the insulation layer.

The wall element may be made of the same material as the storage wall. Furthermore or alternatively, the wall element and the insulation element may be integrally and monolithically formed in order to form one single piece. In other words, the insulation element and the wall element may form a block being movable within the cut-out section of the insulation layer and the wall cut-out section.

According to a further exemplary embodiment, the device further comprises a further wall element, wherein the further wall element is arranged in the wall cut-out section between the insulation element and the environment of the storage wall. In particular, the further wall element may be fixed in the wall cut-out section, such that if forces acting on the load cell element, the forces can be transferred to the further wall element without movement of the further wall element with respect to the storage wall. However, the further wall element may be detachably fixed to the wall cut-out section, such that the further wall element may be removed in order to provide an access to the load cell element.

According to a further exemplary embodiment, the wall cut-out section forms a through hole in the storage wall such that the load cell element is accessible from an outer surface of the storage wall, which outer surface faces the environment of the storage wall. Hence, the load cell element can be arranged within the through hole in a detachable and exchangeable manner, such that for example upon defect or upon maintenance reasons, the load cell element can be accessed from an outer surface of the storage wall. Hence, it is not necessary to access the load cell element from the inner storage volume.

According to a further exemplary embodiment, the heat storage system comprises a supporting element, in particular a supporting beam, to which the load cell element is supported. The supporting element is detachably mounted to the storage wall, in particular to the outer surface of the storage wall. The supporting element is configured such that upon mounting the supporting element to the storage wall, the load cell element is held by the supporting element in the wall cut-out section. Hence, the supporting beam may be easily mounted to an outer surface of the storage wall while the load cell element, which is supported by the supporting element, is arranged and adjusted within the respective cut-out section. The load cell element may be fixed to the supporting element. However, the load cell element may be coupled and fixed into a wall cut-out section and the supporting element covers the wall cut out section and thereby contacts the load cell element such that the load cell element is kept in place within the wall cut-out section and e.g. prevented from falling out of the wall cut-out section.

According to a further exemplary embodiment, a plurality of load cell elements may be mounted to the supporting element, such that the supporting element carries a plurality of load cell elements which are arrangeable in respective cut-out sections within the storage wall and/or the insulation layer, respectively.

According to a further exemplary embodiment, the heat storage device comprises at least one further load cell element for measuring forces acting from the inner storage volume against the storage wall. Furthermore, the heat storage device further comprises at least one further insulation element, wherein the insulation layer comprises a further cut-out section being spaced apart from the cut-out section in which the insulation element is located. In the further cut-out section the further insulation element is movably inserted in such a manner that the further insulation element is movable with respect to the insulation layer upon acting of forces from the inner storage volume against the further insulation element. The further load cell element is coupled to the further insulation element in such a manner that forces acting from the inner storage volume against the further insulation element are transferrable to the further load cell element.

Hence, to a plurality of locations of the heat storage device, force measurements for determining the loads acting on the storage wall and the insulation layer, respectively, can be provided in order to achieve an overall analysis of the forces acting from the inner storage volume on the structural members of the storage device.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 shows a schematic view of a heat storage device comprising a load cell element according to an exemplary embodiment of the present invention.
Fig. 2 shows a detailed view of a heat storage device according to an exemplary embodiment of the present invention.
Fig. 3 shows a schematic view of a further heat storage device comprising a load cell element which is mounted to a supporting element according to an exemplary embodiment of the present invention.
Fig. 4 shows a schematic view of a further heat storage device comprising a further wall element according to an exemplary embodiment of the present invention.

### Detailed Description

The illustrations in the drawings are schematically. It is noted that in different figures, similar or identical elements are provided with the same reference signs.

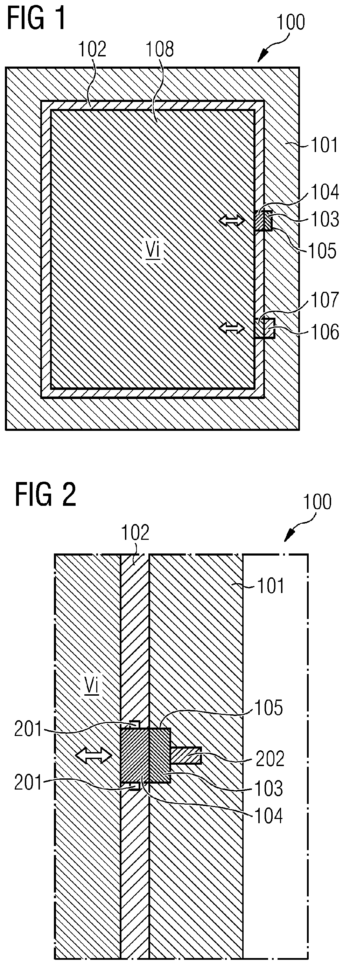

**Fig. 1** shows a heat storage device 100 according to an exemplary embodiment of the present invention. The heat storage device 100 comprises a storage wall 101 at least partially surrounding an inner storage volume Vi of the heat storage device 100 and an insulation layer 102 arranged at an inner surface of the storage wall 101 facing to the inner storage volume Vi.

The heat storage device 100 further comprises a load cell element 103 for measuring forces acting from the inner storage volume Vi against the storage wall 101 and an insulation element 104. The insulation layer 102 comprises a cut-out section in which the insulation element 104 is movably inserted in such a manner that the insulation element 104 is movable with respect to the insulation layer 102 upon acting of forces from the inner storage volume Vi against the insulation element 104. The load cell element 103 is coupled to the insulation element 104 in such a manner that forces acting from the inner storage volume Vi against the insulation element 104 are transferrable to the load cell element 103.

The heat storage device 100 is adapted for receiving thermal energy from a heated working fluid in order to store the thermal energy. The heat storage device 100 includes heat storage material 108. The heat storage device 100 comprises a fluid inlet for injecting working fluid into the inner storage volume Vi of the heat storage device 100 and a respective fluid outlet for ejecting the working fluid out of the inner storage volume Vi of the heat storage device.

The heat storage device 100 comprises the storage wall 101 which surrounds the inner storage volume Vi. The heat storage wall 101 provides the structural stability of the heat storage device 100. In order to provide a proper insulation of the heat storage system 100 between the inner storage volume Vi and the environment of the storage device 100, the insulation layer 102 is arranged at an inner surface of the storage wall 101. The insulation layer 102 may be formed of temperature isolating material which provides less strength than the storage wall 101.

In order to measure the forces acting from the inner storage volume Vi against the storage wall 101, at least one load cell element 103 is provided. The load cell element 103 is a force transducer which converts a force such as tension, compression, pressure, or torque generated in the inner storage volume Vi into an electrical signal that can be measured. As the force applied to the load cell element 103 increases, the electrical signal changes proportionally.

In order to protect the load cell element 103 from the temperature and other impacts originating in the inner storage volume Vi, the load cell element 103 is thermally isolated from the inner storage volume. Specifically, the load cell element 103 is arranged within a wall cut-out section 105 of the storage wall 101 spaced apart from the inner storage volume. In order to assure a force transmission between the forces acting in the inner storage volume Vi and the load cell element 103, the insulation layer 102 comprises an opening and a cutout section, respectively. Within the cutout section, the movable insulation element 104, which is also made of thermally isolating material, is arranged. Hence, upon acting of forces from the inner storage volume Vi against the insulation element 104, the insulation element 104 is movable against the load cell element 103 in order to transmit respective forces acting from the inner storage volume Vi against insulation element 104.

The load cell element 103 is integrated into the heat storage wall 101 of the storage housing of the heat storage device 100 to measure the forces acting on the heat storage wall 101. The load cell elements 103 are integrated at an outer position in the storage wall 101 while still receiving information about the forces originating from the storage material in the inner storage volume Vi. The movable insulation element 104 bridges the installation location of the load cell element 103 and the inner storage volume Vi while providing a transmitting of respective forces from the inner storage volume Vi to the load cell element 103.

In the exemplary embodiment shown in Fig. 1, the load cell element 103 is directly coupled to a surface of the insulation element 104, which surface faces away from the inner storage volume Vi.

The load cell element 103 may comprise a section which extends into the cut-out section of the insulation layer 102. Hence, the thickness of the insulation element 104 may be thinner than the thickness of the insulation layer 102, in order to provide a smooth and homogeneous inner surface of the insulation layer 102 and the respective insulation element 104 facing to the inner storage volume Vi.

Furthermore, the heat storage device 100 comprises at least one further load cell element 106 for measuring forces acting from the inner storage volume Vi against the storage wall 101. Furthermore, the heat storage device 100 further comprises at least one further insulation element 107, wherein the insulation layer 102 comprises a further cut-out section being spaced apart from the cut-out section in which the insulation element 104 is located. In the further cut-out section the further insulation element 106 is movably inserted in such a manner that the further insulation element 107 is movable with respect to the insulation layer 102 upon acting of forces from the inner storage volume Vi against the further insulation element 107. The further load cell element 106 is coupled to the further insulation element 107 in such a manner that forces acting from the inner storage volume Vi against the further insulation element 107 are transferrable to the further load cell element 106.

Hence, along a plurality of locations of the heat storage device 100, force measurements for determining the loads acting on the storage wall 101 and the insulation layer 102, respectively, can be provided in order to achieve an overall analysis of the forces acting from the inner storage volume Vi on the structural members of the storage device 100.

As can be taken from the detailed view in **Fig. 2****,** the load cell element 103 comprises a coupling surface to be coupled with a further coupling surface of the insulation element 104, wherein the coupling surface of the load cell element 103 and the further coupling surface of the insulation element 104 have the same dimensions (and e.g. surface areas).

Furthermore, at the cut-out section in the insulation layer 102, guiding elements 201 are formed, wherein the insulation element 104 is coupled to the guiding elements 201 for being guided during movement of the insulation element 104 inside the cut-out section. A guiding element 201 is formed by a guiding rail or a guiding groove, to which a respective guiding section of the insulation element 104 can be engaged.

Furthermore, a return force element 202 is coupled to the insulation element 104 in such a way that a return force is generatable acting in the direction towards the inner storage volume Vi. The return force element 202 may be an compressible elastic element, a compression spring or a tension spring. Hence, if a pressure inside the inner storage volume Vi reduces and hence the force acting on the insulation element 104 reduces, the return force generated by the return force element 202 pushes the insulation element 104 in the direction away from the load cell element 103.

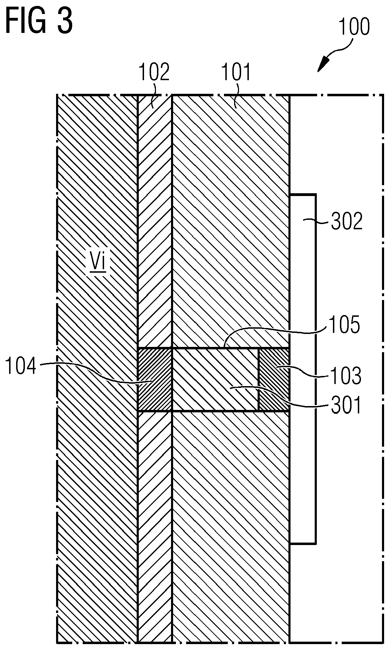

**Fig. 3** shows a schematic view of a further heat storage device 100 comprising a load cell element 103 which is mounted to a supporting element 302. The storage wall 101 comprises a wall cut-out section 105 for accommodating the load cell element 103. The wall cut-out section 105 forms a respective accommodation space, such as a blind hole or a through hole as illustrated in Fig. 3, into which the load cell element 103 is arranged and detachably fixed.

The heat storage device 100 further comprises a wall element 301 which is movably inserted in the wall cut-out section 105 between the insulation element 104 and the load cell element 103. The wall element 101 is coupled to the insulation element 104 in such a manner that the wall element 301 is movable with respect to the storage wall 101 upon acting of forces from the inner storage volume Vi against the insulation element 104 and hence upon movement of the insulation element 104 against the wall element 301. The load cell element 103 is coupled to the wall element 301 in such a manner that forces acting from the inner storage volume Vi against the insulation element 104 are transferrable via the movable wall element 301 to the load cell element 103.

Hence, the load cell element 103 is arranged within the storage wall 101 at the location spaced apart from a contact surface between the storage wall 101 and the insulation element 104. The distance between the insulation element 104 and the load cell element 103 is bridged by the wall element 301 which is movably inserted between the load cell element 103 and the insulation element 104. If forces acting onto the insulation element 104, the insulation element can also be moved partially within the wall cut-out section. Alternatively, a part of the wall element 301 may also be moved into the cut-out section of the insulation layer 102.

The wall cut-out section 105 forms a through hole in the storage wall 101 such that the load cell element 103 is accessible from an outer surface of the storage wall 101, which outer surface faces the environment of the storage wall 101. Hence, the load cell element 103 can be arranged within the through hole in a detachable and exchangeable manner, such that for example upon defect or upon maintenance reasons, the load cell element 103 can be reached from an outer surface of the storage wall 101.

Furthermore, the load cell element 103 may be mounted to a supporting element 302. The supporting element 302 is detachably mounted to the storage wall 101, in particular to the outer surface of the storage wall 101. The supporting element 302 is configured such that upon mounting the supporting element 302 to the storage wall 101, the load cell element 103 protrudes from the supporting element 301 into the wall cut-out section 105 such that the load cell element 103 can be mounted in a force transmitting manner with the wall element 301 and/or the insulation element 104. Hence, the supporting element 302, such as a supporting beam, may be easily mounted to an outer surface of the storage wall 101 while the load cell element 103, which may be mounted to the supporting element 302, is arranged and adjusted within the respective cut-out section.

Furthermore, a plurality of load cell elements 103 may be mounted to one supporting element 302, such that the supporting element 302 carries a plurality of load cell elements 103 which are arrangeable in respective wall cut-out sections 105 within the storage wall 101 and/or the insulation layer 102, respectively.

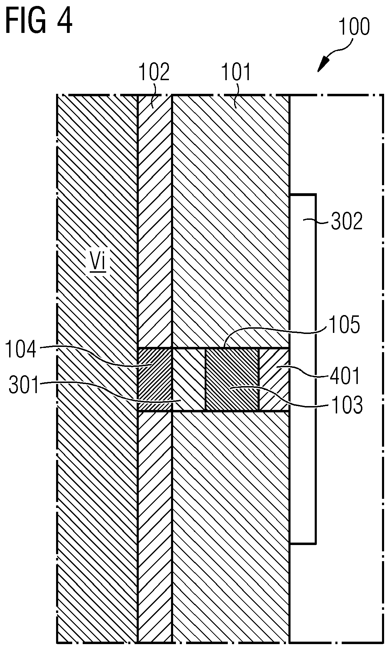

The embodiment shown in **Fig. 4** is similar to the one shown in Fig. 3. However, the heat storage device 100 comprises a further wall element 401. The further wall element 401 is arranged in the wall cut-out 105 section between the insulation element 104 and the outer environment of the storage wall 101. In particular, the further wall element 401 is fixed in the wall cut-out section 105, such that if forces acting on the load cell element 103, the forces can be transferred to the further wall element 401 without movement of the further wall element 401 with respect to the storage wall 101.

The further wall element 401 may be mounted to the supporting element 302, such that upon detaching the supporting element 302, also the further wall element is removed such that an access to the load cell element 103 can be provided.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Heat storage device (100), comprising
a storage wall (101) at least partially surrounding an inner storage volume (Vi) of the heat storage device,
an insulation layer (102) arranged at an inner surface of the storage wall (101) facing to the inner storage volume (Vi),
a load cell element (103) for measuring forces acting from the inner storage volume (Vi) against the storage wall (101),
an insulation element (104),
wherein the insulation layer (102) comprises a cut-out section in which the insulation element (104) is movably inserted in such a manner that the insulation element (104) is movable with respect to the insulation layer (102) upon acting of forces from the inner storage volume (Vi) against the insulation element (104),
wherein the load cell element (103) is coupled to the insulation element (104) in such a manner that forces acting from the inner storage volume (Vi) against the insulation element (104) are transferrable to the load cell element (103).

2. Heat storage device (100) according to claim 1,
wherein the load cell element (103) is arranged within the storage wall (101),
wherein the storage wall (101) comprises in particular a wall cut-out section (105) for accommodating the load cell element (103) .

3. Heat storage device (100) according to claim 1 or 2,
wherein the insulation element (104) is made of the same material as the insulation layer (102).

4. Heat storage device (100) according to one of the claims 1 to 3,
wherein the load cell element (103) comprises a coupling surface to be coupled, in particular directly, with a further coupling surface of the insulation element (104),
wherein the coupling surface of the load cell element (103) and the further coupling surface of the insulation element (104) have the same dimensions.

5. Heat storage device (100) according to one of the claims 1 to 4,
wherein at the cut-out section in the insulation layer (102), guiding elements (201) are formed,
wherein the insulation element (104) is coupled to the guiding elements (201) for being guided inside the cut-out section.

6. Heat storage device (100) according to one of the claims 1 to 5,
wherein the load cell element (103) comprises a return force element (202) which is coupled to the insulation element (104) in such a way that a return force is generatable acting in the direction towards the inner storage volume (Vi).

7. Heat storage device (100) according to one of the claims 1 to 6, further comprising
a wall element (301),
wherein the wall element (301) is movably inserted in a wall cut-out section (105) between the insulation element and the load cell element (103),
wherein the wall element (301) is coupled to the insulation element in such a manner that the wall element (301) is movable with respect to the storage wall (101) upon acting of forces from the inner storage volume (Vi) against the insulation element (104),
wherein the load cell element (103) is coupled to the wall element (301) in such a manner that forces acting from the inner storage volume (Vi) against the insulation element (104) are transferrable via the movable wall element (301) to the load cell element (103).

8. Heat storage device (100) according to claim 7, further comprising
a further wall element (401),
wherein the further wall element (401) is arranged in the wall cut-out section (105) between the insulation element and the environment of the storage wall (101).

9. Heat storage device (100) according to claim 7 or 8,
wherein the wall cut-out section (105) forms a through hole in the storage wall (101) such that the load cell element (103) is accessible from an outer surface of the storage wall (101), which outer surface faces the environment of the storage wall (101).

10. Heat storage device (100) according to claim 9, further comprising
a supporting element (302), in particular a supporting beam, to which the load cell element (103) is supported, wherein the supporting element (302) is detachably mounted to the storage wall (101),
wherein the supporting element (302) is configured such that upon mounting the supporting element (302) to the storage wall (101), the load cell element (103) is held by the supporting element (302) in the wall cut-out section (105).

11. Heat storage device (100) according to one of the claims 1 to 10, further comprising
at least one further load cell element (106) for measuring forces acting from the inner storage volume (Vi) against the storage wall (101),
at least one further insulation element (107),
wherein the insulation layer (102) comprises a further cut-out section being spaced apart from the cut-out section, wherein in the further cut-out section the further insulation element (107) is movably inserted in such a manner that the further insulation element (107) is movable with respect to the insulation layer (102) upon acting of forces from the inner storage volume (Vi) against the further insulation element (107),
wherein the further load cell element (106) is coupled to the further insulation element (107) in such a manner that forces acting from the inner storage volume (Vi) against the further insulation element (107) are transferrable to the further load cell element (106).

12. Method for manufacturing a heat storage device (100), the method comprising
providing a storage wall (101) at least partially surrounding an inner storage volume (Vi) of the heat storage device,
arranging an insulation layer (102) at an inner surface of the storage wall (101) facing to the inner storage volume (Vi),
movably inserting an insulation element (104) in a cut-out section of the insulation layer (102) in such a manner that the insulation element (104) is movable with respect to the insulation layer (102) upon acting of forces from the inner storage volume (Vi) against the insulation element (104),
coupling the load cell element (103) to the insulation element (104) in such a manner that forces acting from the inner storage volume (Vi) against the insulation element (104) are transferrable to the load cell element (103).
